# EUROPÄISCHE PATENTANMELDUNG

(11) **EP 2 146 102 A2**
(43) Veröffentlichungstag der Anmeldung: **20.01.2010**
(21) Anmeldenummer: 09008491.4
(22) Anmeldetag: 30.06.2009
(51) Int. Cl.: F16B 13/00

(54) **Dämmstoffhalter**

(30) Priorität: 18.07.2008 DE 102008033768
(71) Anmelder: fischerwerke GmbH & Co. KG, 72178 Waldachtal (DE)
(72) Erfinder: Störzer, Markus, 72178 Waldachtal (DE)
(74) Vertreter: Suchy, Ulrich Johannes

(57) **Zusammenfassung**

Die Erfindung betrifft einen Dämmstoffhalter (1) zum Anbringen einer Isolierplatte an einen Untergrund, mit einem hülsenförmigen Halterschaft (2), an dem ein Halterelement (4) zum Halten der Isolierplatte angeordnet ist, einem Anker (7) und einer Ankerverlängerung (8) mit der der Anker (7) eintreibbar ist. Um eine einfache Produktion und kostengünstige Lagerhaltung für unterschiedlich lange Dämmstoffhalter (1) zu ermöglichen, schlägt die Erfindung vor, dass die Ankerverlängerung (8) mehrteilig ist. Insbesondere sollen mehrere gleichartige Zwischenstücke (18, 19) verwendet werden.

## Beschreibung

Die Erfindung betrifft einen Dämmstoffhalter mit den Merkmalen des Oberbegriffs des Anspruchs 1.

Ein derartiger Dämmstoffhalter ist beispielsweise aus der Druckschrift DE 195 39 041 A1 bekannt. Der Dämmstoffhalter zum Anbringen einer Isolierplatte an einen Untergrund weist einen hülsenförmigen Halterschaft auf, mit einem, an seinem in Einsteckrichtung hinteren Ende angeordneten Halterelement in Form eines bundartigen Tellers. Mit seinem in Einsteckrichtung vorderen Ende ist der Halterschaft mit einem Spreizelement in Form einer Dübelhülse verbunden. Zum Verspreizen der Dübelhülse weist der Dämmstoffhalter einen metallischen, nagelförmigen Anker und eine Ankerverlängerung aus Kunststoff auf, mit der der Anker in die Dübelhülse eintreibbar ist. Der Anker und die Ankerverlängerung sind zwei separate Teile, die durch den hohlen Halterschaft geführt werden.

Einen ähnlichen Halter zeigt die Druckschrift EP 1 111 156 A2. Abweichend von der oben genannten Druckschrift besteht der Anker, wie auch die Ankerverlängerung, aus Kunststoff, wobei am hinteren Ende des Ankers ein bundartiger Kopf angeformt ist. Die Ankerverlängerung weist an ihrem in Einbringrichtung vorderen Ende, mit der sie den Anker berührt, eine Ring-Schnapp-Verbindung auf, durch die sie mit dem Kopf des Ankers zugfest koppelbar ist. Bei dem in der Druckschrift EP 1 693 530 A1 dargestellten Dämmstoffhalter ist der Anker eine Schraube, die mit der Ankerverlängerung durch eine Kupplung drehfest gekoppelt ist.

Es sind auch Dämmstoffhalter ohne Spreizelement bekannt, bei denen der Dämmstoffhalter mit dem Anker direkt im Untergrund verankert wird. Besteht der Untergrund beispielsweise aus Holz, so kann ein als Nagel oder als Schraube ausgeführter Anker direkt darin befestigt werden.

Die mit Dämmstoffhaltern befestigbaren Isolierplatten werden in verschiedensten Dicken hergestellt. Typischerweise liegt die Dicke bei 40 mm bis 300 mm, wobei die Abstufung der Dicke üblicherweise in Schritten von 20 mm erfolgt. Zum Anbringen der unterschiedlich Dicken Isolierplatten sind unterschiedlich lange Dämmstoffhalter notwendig. Für gewöhnlich werden der Halterschaft, der Anker und/oder die Ankerverlängerung in unterschiedlichsten Längen produziert und vorgehalten, um Bauvorhaben zeitnah mit Dämmstoffhaltern der benötigten Länge beliefern zu können. Dies macht eine relativ teure und aufwändige Lagerhaltung der vielen verschiedenen Einzelteile unterschiedlichster Länge notwendig.

Aufgabe der Erfindung ist daher, einen Dämmstoffhalter vorzuschlagen, mit dem eine einfache Produktion und eine kostengünstige Lagerhaltung für unterschiedlich lange Dämmstoffhalter möglich ist.

Diese Aufgabe wird erfindungsgemäß durch einen Dämmstoffhalter mit den Merkmalen des Anspruchs 1 gelöst. Der erfindungsgemäße Dämmstoffhalter zum Anbringen einer Isolierplatte an einen Untergrund weist einen hülsenförmigen Halterschaft auf, an dem ein Halterelement zum Halten der Isolierplatte angeordnet ist sowie eine Ankerverlängerung und einen Anker. Die Ankerverlängerung dient zum Eintreiben des Ankers. Kennzeichnend für den erfindungsgemäßen Dämmstoffhalter ist die Mehrteiligkeit der Ankerverlängerung. Durch die Mehrteiligkeit ist ein modularer Aufbau der Ankerverlängerung mit standardisierten Komponenten möglich. Dadurch kann die Anzahl der Werkzeuge für Ankerverlängerungen unterschiedlicher Länge reduziert und Kosten eingespart werden. Vorzugsweise weist die Ankerverlängerung ein Endstück und ein Zwischenstück auf. Das Zwischenstück befindet sich zwischen dem Anker und dem Endstück und überträgt eine auf das Endstück aufgebrachte Kraft und/oder ein Moment zum Eintreiben des Ankers auf den Anker.

Bei einer bevorzugten Ausgestaltungsform des erfindungsgemäßen Dämmstoffhalters weist die Ankerverlängerung mehrere Zwischenstücke auf. Somit ist es möglich, mit mehreren kurzen Zwischenstücken und einem Endstück eine relativ lange Ankerverlängerung zu schaffen. Vorzugsweise haben die Zwischenstücke im Wesentlichen die gleiche Länge. Insbesondere können die Zwischenstücke eine Länge von 20 mm aufweisen, so dass durch Kombination mehrerer, insbesondere gleichartiger Zwischenstücke Ankerverlängerungen mit der für Isolierplatten typischen Abstufung von 20 mm herstellbar sind. So kann beispielsweise die Ankerverlängerung für einen Dämmstoffhalter für Isolierplatten der Dicke 120 mm unter Verwendung eines zusätzlichen Zwischenstücks für Dämmstoffhalter für Isolierplatten der Dicke 140 mm verwendet werden. Wird dagegen ein Zwischenstück weggelassen, so entsteht eine Ankerverlängerung für Isolierplatten der Dicke 100 mm. Vorzugsweise weisen wenigstens zwei Zwischenstücke im Wesentlichen den gleichen Querschnitt auf, wobei es von Vorteil ist, wenn alle Zwischenstücke einen im Wesentlichen gleichen Querschnitt haben. Vorzugsweise ist der Querschnitt eines Zwischenstücks über seine Länge im Wesentlichen konstant. Damit ist es möglich, mit nur zwei standardisierten Bauteiltypen, dem Zwischenstück und dem Endstück, Ankerverlängerungen unterschiedlicher Länge zu schaffen, so dass bei typischen Längen der Dämmstoffhalter immer der gleiche Ankertyp verwendbar ist. Dies ermöglicht eine einfache Produktion und kostengünstige Lagerhaltung der Dämmstoffhalter auf Grund einer deutlichen Reduktion der Einzelteile.

Eine weitere bevorzugte Ausführungsform des erfindungsgemäßen Dämmstoffhalters weist eine Ankerverlängerung auf, deren Teile koppelbar sind. Koppelbar bedeutet in diesem Zusammenhang, dass mindestens zwei Teile der Ankerverlängerung korrespondierende Querschnitte aufweisen, so dass die Teile derart miteinander verbindbar sind, dass sie insbesondere an ihren Kontaktflächen nicht normal zur Achse gegeneinander verschiebbar sind. Vorzugsweise sind die Teile der Ankerverlängerung zugfest miteinander gekoppelt, so dass Zugkräfte von der Ankerverlängerung aufgenommen werden können. Von Vorteil ist, wenn die Ankerverlängerung auch mit dem Anker zugfest gekoppelt ist.

Bei einer weiteren bevorzugten Ausgestaltungsform des erfindungsgemäßen Dämmstoffhalters sind die Teile der Ankerverlängerung drehfest koppelbar, so dass ein Drehmoment über die Ankerverlängerung übertragen werden kann. Somit ist es beispielsweise möglich, den Anker als Schraube auszubilden, die durch eine Drehbewegung des Endstücks der Ankerverlängerung eintreibbar ist. Idealerweise weist das Endstück hierzu ein Drehmitnahmemittel auf. Das Endstück und der Anker sind in diesem Fall ebenfalls mit der Ankerverlängerung gekoppelt.

Alternativ zur Verwendung einer Schraube als Anker kann ein Nagel verwendet werden, wobei der Nagel, wie auch die Schraube, keinen speziellen Kopf mit einem Bund oder einer Querschnittsaufweitung aufweisen muss. Zum Eintreiben des Nagels reicht es aus, wenn die Ankerverlängerung am in Eintreibrichtung hinteren Ende des Nagels anliegt und axiale Druckkräfte auf den Anker übertragen kann.

Abhängig von der Ausgestaltung des Dämmstoffhalters kann der Anker direkt in den tragenden Untergrund eingetrieben oder zur Spreizung eines Spreizelements verwendet werden. Ein direktes Eintreiben und Verankern des Ankers im tragenden Untergrund ist beispielsweise bei einer Unterkonstruktion aus Holz und einem als Nagel oder Schraube ausgestalteten Anker möglich. Alternativ hierzu weist eine bevorzugte Ausführungsform des erfindungsgemäßen Dämmstoffhalters ein Spreizelement auf, das durch das Eintreiben eines Nagels oder einer Schraube spreizbar ist. Das Spreizelement ist beispielsweise ein Dübel, mit dem der Dämmstoffhalter in einem Bohrloch, beispielsweise in einem Untergrund aus Beton oder Mauerwerk, verankerbar ist. Der Dübel kann einstückig mit dem Dämmstoffhalter verbunden sein.

Die Erfindung wird nachfolgend anhand eines Ausführungsbeispiels näher erläutert.

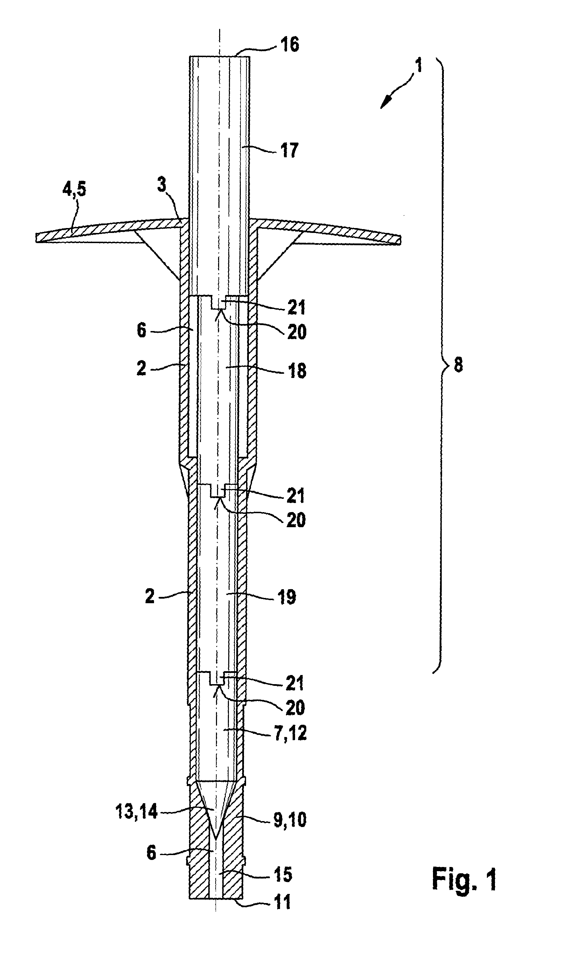

Figur 1 zeigt einen erfindungsgemäßen Dämmstoffhalter 1 zum Anbringen einer nicht dargestellten Isolierplatte an einen nicht dargestellten Untergrund. Der Dämmstoffhalter 1 weist einen hülsenförmigen Halterschaft 2 auf, mit einem an seinem in Einbringrichtung hinteren Ende 3 angeordneten Halterelement 4 in Form eines bundartigen Tellers 5, der zum Halten der Isolierplatte dient. Der hülsenförmige Halterschaft 2 ist lang gestreckt, mit einem in Längsrichtung verlaufenden zylinderförmigen Hohlraum 6 zur Aufnahme eines Ankers 7 und einer Ankerverlängerung 8. An den Halterschaft 2 schließt sich in Einbringrichtung ein Spreizelement 9 in Form einer Dübelhülse 10 an, die einstückig mit dem Halterschaft 2 verbunden ist. Die Dübelhülse 10 weist eine Verengung 15 des zylinderförmigen Hohlraums 6 auf und bildet das vordere Ende 11 des Dämmstoffhalters 1. Der Anker 7 ist als Nagel 12 ausgebildet, alternativ könnte er als Schraube oder Schraubnagel ausgeführt sein. Er weist eine zylindrische Form mit einer Spitze 13 an seinem vorderen Ende 14 auf. Der Nagel 12 ist in die Verengung 15 der Dübelhülse 10 eintreibbar, wodurch die Dübelhülse 10 zur Verankerung in einem nicht dargestellten Bohrloch verspreizt wird. Der Nagel 12 ist vorzugsweise aus Metall oder einem harten Kunststoff hergestellt.

Zum Eintreiben des Nagels 12 schließt sich entgegen der Einbringrichtung an den Anker 7 die Ankerverlängerung 8 an. Die Ankerverlängerung 8 weist an ihrem in Einsteckrichtung hinteren Ende 16 ein Endstück 17 und zwischen dem Endstück 17 und dem Anker 7 ein erstes Zwischenstück 18 und ein zweites Zwischenstück 19 auf. Die Ankerverlängerung 8 überträgt durch Schläge auf das Endstück 17 zum Eintreiben des Ankers 7 in die Dübelhülse 10 aufgebrachte Axialkräfte über die Zwischenstücke 18,19 auf den Anker 7. Ist der Anker 7 genügend weit in die Dübelhülse 10 eingetrieben, so schließt das Endstück 17 mit dem hinteren Ende 3 des Halterschafts 2 bündig ab. Ein weiteres Eintreiben der Ankerverlängerung 8 und des Ankers 7 ist nicht möglich. Die Zwischenstücke 18,19 der Ankerverlängerung 8 sind im Wesentlichen gleich lang und weisen einen im Wesentlichen gleichen kreisförmigen Querschnitt auf, der im Wesentlichen über die Länge des Zwischenstücks 18,19 konstant ist.

Um die Lage der Zwischenstücke 18, 19, das Endstück 17 und des Ankers 7 zueinander zu fixieren und eine Bewegung der Bauteile quer zu Längsachse des Dämmstoffhalters 1 zu verhindern, sind die Zwischenstücke 18,19, das Endstück 17 und der Anker 7 miteinander koppelbar. Zur Kopplung weist der Anker 7 an seinen in Einsteckrichtung hinteren Ende eine Vertiefung 20 auf, in die ein am vorderen Ende des zweiten Zwischenstücks 19 angebrachter Zapfen 21 im Wesentlichen ohne Spiel eingreift. Diese Koppelelemente 20, 21 finden sich ebenfalls an den weiteren Bauteilen 17, 18, 19. Durch die Kopplung lässt sich aus den einzelnen Bauteilen 7, 17, 18, 19 eine relativ stabile Ankerverlängerung 8 herstellen. Gegebenenfalls können die einzelnen Bauteile 7, 17, 18, 19 zugfest und/oder drehfest koppelbar sein, beispielsweise durch Rastelemente und/oder Geometrien, wie sie von Schrauben bzw. Schraubendrehern bekannt sind.

Durch die Verwendung mehrerer Zwischenstücke 18, 19 ist es möglich, die Ankerverlängerung 8 an die Länge des Halterschafts 2 durch Weglassen oder Hinzufügen von Zwischenstücken 18, 19 einfach und kostengünstig anzupassen. Somit ist es nicht notwendig, für verschiedene Längen des Halterschafts 2 verschiedene Längen von Ankern 7 und/oder Ankerverlängerungen 8 vorzuhalten. Es reicht die Lagerhaltung von drei Bauteilen, dem Anker 7, dem Zwischenstück 18, 19 und dem Endstück 17, wobei aus dem Zwischenstück 18, 19 und dem Endstück 17 jede für Dämmstoffhalter typische Länge der Ankerverlängerung 8 geschaffen werden kann.

Vorteilhaft ist zudem, dass die Zwischenstücke 18, 19 und das Endstück 17 aus unterschiedlichen Materialien gefertigt werden können, wobei vorzugsweise Kunststoff eingesetzt wird. Ebenso ist der Halterschaft 2 mit dem daran angeformten Halterelement 4 und dem Spreizelement 9 vorzugsweise aus Kunststoff gefertigt.

### Bezugszeichenliste

### Dämmstoffhalter

- 1: Dämmstoffhalter
- 2: hülsenförmiger Halterschaft
- 3: hinteres Ende des Dämmstoffhalters 1
- 4: Halterelement
- 5: bundartiger Teller
- 6: zylinderförmige Hohlraum
- 7: Anker
- 8: Ankerverlängerung
- 9: Spreizelement
- 10: Dübelhülse
- 11: vorderes Ende des Dämmstoffhalters 1
- 12: Nagel
- 13: Spitze des Nagels 12
- 14: vorderes Ende des Ankers 7
- 15: Verengung
- 16: hinteres Ende der Ankerverlängerung 8
- 17: Endstück
- 18: erstes Zwischenstück
- 19: zweites Zwischenstück
- 20: Vertiefung
- 21: Zapfen

## Patentansprüche

1. Dämmstoffhalter (1) zum Anbringen einer Isolierplatte an einen Untergrund, mit
- einem hülsenförmigen Halterschaft (2), an dem ein Halterelement (4) zum Halten der Isolierplatte angeordnet ist,
- einem Anker (7), und
- einer Ankerverlängerung (8) mit der der Anker (7) eintreibbar ist,
**dadurch gekennzeichnet, dass** die Ankerverlängerung (8) mehrteilig ist.

2. Dämmstoffhalter nach Anspruch 1, **dadurch gekennzeichnet, dass** die Ankerverlängerung (8) ein Endstück (17) und ein Zwischenstück (18, 19) aufweist.

3. Dämmstoffhalter nach Anspruch 2, **dadurch gekennzeichnet, dass** die Ankerverlängerung (8) mehrere Zwischenstücke (18, 19) aufweist.

4. Dämmstoffhalter nach Anspruch 3, **dadurch gekennzeichnet, dass** mindestens zwei Zwischenstücke (18, 19) im Wesentlichen die gleiche Länge aufweisen.

5. Dämmstoffhalter nach Anspruch 3 oder 4, **dadurch gekennzeichnet, dass** mindestens zwei Zwischenstücke (18, 19) im Wesentliche den gleichen Querschnitt aufweisen.

6. Dämmstoffhalter nach einem der Ansprüche 3 bis 5, **dadurch gekennzeichnet, dass** ein Zwischenstück (18, 19) über seine Länge einen im Wesentlichen konstanten Querschnitt aufweist.

7. Dämmstoffhalter nach einem der Ansprüche 1 bis 6, **dadurch gekennzeichnet, dass** die Teile der Ankerverlängerung (17, 18, 19) koppelbar sind.

8. Dämmstoffhalter nach Anspruch 7, **dadurch gekennzeichnet, dass** die Teile der Ankerverlängerung (17, 18, 19) zugfest koppelbar sind.

9. Dämmstoffhalter nach Anspruch 7 oder 8, **dadurch gekennzeichnet, dass** die Teile der Ankerverlängerung (17, 18, 19) drehfest koppelbar sind.

10. Dämmstoffhalter nach einem der Ansprüche 1 bis 9, **dadurch gekennzeichnet, dass** der Anker (7) ein Nagel (12) ist.

11. Dämmstoffhalter nach einem der Ansprüche 1 bis 9, **dadurch gekennzeichnet, dass** der Anker (7) eine Schraube ist.

12. Dämmstoffhalter nach einem der Ansprüche 1 bis 11, **dadurch gekennzeichnet, dass** der Dämmstoffhalter (1) ein Spreizelement (9) aufweist.
